(19) Europäisches Patentamt
European Patent Office
Office européen des brevets

(11) **EP 4 756 377 A1**

(12) **EUROPEAN PATENT APPLICATION**

(43) Date of publication:
**10.06.2026 Bulletin 2026/24**

(21) Application number: **24217384.7**

(22) Date of filing: **04.12.2024**

(51) International Patent Classification (IPC):
*G01C 21/00* (2006.01)

(52) Cooperative Patent Classification (CPC):
**G01C 21/3841; G01C 21/3811; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLKSWAGEN AG**
**38440 Wolfsburg (DE)**

(72) Inventors:
• **Wappler, Stefan**
**38440 Wolfsburg (DE)**
• **Mendoza, Ricardo Carillo**
**38440 Wolfsburg (DE)**

(54) **METHOD FOR FUSING A PLURALITY OF SINGLE DRIVE MAPS**

(57) The invention discloses a Method for fusing a plurality of single drive maps (SDM1-SDM4), each single drive map (SDM1-SDM4) containing a plurality of data objects (6, 6a-c) associated with corresponding fixed objects (4) of a bordered traffic area (1), said data objects (6, 6a-c) being based on a data collection by a respective vehicle (mv1, mv2) when driving through said bordered traffic area (1), wherein for a first data object (6a) of a first single drive map (SDM1), it is determined whether an associated data object (14) exists in a defined vicinity 812) of said first data object (6a) in any other single drive map (SDM2-SDM4) out of said plurality, acquiring thereby a number of associated data objects (14) of the first data object (6a), wherein, based on the number of said associated data objects (14), an existence model (18) for the existence of a first fixed object (4) at the location in the bordered traffic area (1) corresponding to said first data object (6a) is derived, said existence model (18) providing a existence probability (p) for the existence of said first fixed object (4), and wherein a first master data object (20) is registered into a fused map (FM), said fused map (FM) being the fusion of said plurality of single drive maps (SDM1-SDM4), based on said existence probability (p).

Fig. 2

**Description**

The invention is related to a method for fusing a plurality of single drive maps, each single drive map containing a plurality of data objects associated with corresponding fixed objects of a bordered traffic area, said data objects being based on a data collection by a respective vehicle when driving through said bordered traffic area.

Motor vehicles are increasingly equipped with driver assistance systems (DAS) for a variety of specific driving situations, ranging from warning systems such as lane departure warning systems to so-called advanced DAS such as adaptive cruise control or intelligent parking assist systems, among others. A common denominator of these DAS is the acquisition of spatial information about the surroundings of a motor vehicle at a given point in time by means of a number of environment sensors, and an evaluation of the data gathered by said environment sensors in order to assess the specific driving situation regarding relevant objects for the particular DAS. The environment sensors typically are given by Radar-based and/or Lidar-based sensors, and/or cameras or similar optical sensors.

In the increasing autonomy levels of DAS, the motor vehicles are operated with increasing degrees of automatization of more and more driving functions. One major goal is to achieve the so-called "Level 5" corresponding to a fully automatic driving operation in a specific traffic situation and/or traffic area without any need of driver supervision or even attention. To this end, very detailed geographical (and geometrical) information, i.e., driving maps, are required for said automatic operation. While such information can be easily obtained by the use of satellite image data for most roads and streets, opening the possibility to automatically navigate a motor vehicle along a virtual map corresponding to such a satellite image by means of GPS and said optical sensors (the latter ensuring lane keeping etc.), this information is typically not available for indoor spaces such as indoor parking lots. However, the process of parking a motor vehicle is one very prominent objective of current developments in the field, as the entire parking process with its standardized motions and the typical low speeds and few moving vehicles on a parking lot appear among the most promising driving processes for reaching full autonomy, i.e., Level 5, without any compromise on the safety.

To this end, one possible approach might be to derive a map from a parking lot (in particular, an indoor parking lot) from the sensor data of a multitude of motor vehicles driving through said parking lot, e.g., by generating so-called single drive maps (SDM) from each drive of a motor vehicle through at least a portion of the parking lot, said SDM containing relevant object of the parking lot such as walls or poles, and joining these SDMs together in order to have more robust information on these objects, as well as to fill blank spaces where no motor vehicle has been driving yet, and thus, no sensor data at all exists.

One of the challenges of this approach is the proper fusion of the different SDMs generated by different motor vehicles. As in indoor parking lots, typical GPS systems for positioning the respective motor vehicle with respect to a reference frame (in order to align the motor vehicle's SDM using the reference frame) normally stop working at a certain point. Thus, the information for linking collected sensor and image data to the reference frame is lost. However, this loss is independent for different motor vehicles. Similar problems may arise in other bordered traffic areas whenever a GPS signal or the like are disturbed by the surroundings (e.g., large metal objects close to the bordered traffic area). Thus, the collected data may contain uncertainty about the location of the motorized vehicle when generating a certain data point, on top of normal detection noise.

It is therefore an object of the invention to provide a method for fusing a plurality of single drive maps, each of which representing at least a part of the same bordered traffic area, which is robust and has no need for an external reference frame given by a GPS signal or the like.

According to the invention, this objective is achieved by a method for fusing a plurality of single drive maps, each single drive map containing a plurality of data objects associated with corresponding fixed objects of a bordered traffic area, said data objects being based on a data collection by a respective vehicle when driving through said bordered traffic area, wherein for a first data object of a first single drive map, it is determined whether an associated data object exists in a defined vicinity of said first data object in any other single drive map out of said plurality, acquiring thereby a number of associated data objects of the first data object.

According to said method, based on the number of said associated data objects, an existence model for the existence of a first fixed object at the location in the bordered traffic area corresponding to said first data object is derived, said existence model providing an existence probability for the existence of said first fixed object, and wherein a first master data object is registered into a fused map, said fused map being the fusion of said plurality of single drive maps, based on said existence probability. Embodiments of particular advantage, and which may be inventive in their own right, are given in the dependent claims and in the following description.

The notion of a bordered traffic area in particular comprises any traffic area, i.e., an area configured and designed to host the traffic of motor vehicles (e.g., by pavement and possibly further preparations and/or installation) that has a physical border with respect to its surroundings, or that by design can be restricted to a space within virtual boundaries. In particular, a bordered traffic area may be given by a parking lot.

The notion of a single drive map (SDM) comprises a map that has been generated by using sensors of a motor vehicle , that has been driving through said bordered traffic area, preferably during one continuous drive of said motor vehicle through the bordered traffic area, i.e., when the same motor vehicle passes through said bordered traffic area on different occasions, preferably, a new SDM is generated each time. The SDM single map contains a plurality of data objects, said data objects preferably comprising positioning information on fixed, i.e., non-moving physical objects such as walls and poles, and preferably on non-moving virtual objects such as parking slots (and/or their respective delimitations). The positioning information may be given as a relative positioning information, obtained via odometry data of the motor vehicle while driving through the bordered traffic area. In particular, said relative positioning information may be given without any direct link to any reference frame, e.g., given by GPS or similar absolute positioning data. In summary, the data objects correspond to said fixed physical and/or virtual objects in the bordered traffic area (such as walls, poles or parking slots), and preferably comprise relative positioning information on these fixed objects.

The SDM is preferably generated from a data collection during said drive-through of a motor vehicle in the bordered traffic area. The data collection preferably comprises collecting positioning information data on said fixed objects by means of a number of radar sensors and/or a number of lidar sensors and/or a number of cameras of the respective motor vehicle, and further comprises a corresponding evaluation of the collected sensor data with respect to a relative position and/or a relative distance to the motor vehicle. In particular, the SDM may be a pre-classified map in the sense that it comprises information on the specific type of a fixed object related to a data object (e.g., whether it is a pole or a wall), and/or in that is has interpolated data on inferred boundaries of the fixed objects, i.e., that possibly sparse or otherwise incomplete data on a specific fixed object is interpolated to have the entire extension of the fixed object covered in the corresponding data object. In other words, if a data collection from a wall gives only a set of discontinuous radar points, the data object in the SDM corresponding to this wall preferably displays the entire wall (and has the full positioning information, inferred from said radar points via said pre-classification).

The notion of fusing a plurality of SDMs shall preferably comprise that, based on the data objects of the underlying SDMs, a new "fused" map is generated, wherein data objects said fused map preferably can only be present at locations where at least one of the underlying SDMs has a corresponding data object, i.e., that the presence of a data object in at least one underlying SMD out of said plurality is a necessary (but in general not sufficient) condition for the fused map having a data object at the same location. The notion of fusing a plurality of SDMs may furthermore comprise taking one SDM, say, the first SDM, out of said plurality as a basis for the fused map, and registering further data objects possibly not being included in said first SDM, said registration of another data object having as a necessary (but in general not sufficient) condition the occurrence in at least one further SDM out of said plurality.

The notion of a defined vicinity of a first data object of the first SDM may in particular comprise an $\varepsilon$-environment of said first object with a defined distance parameter $\varepsilon$, i.e., a hull of points in the first SDM around said first data object which have at most the (orthogonal) distance of $\varepsilon$ with respect to the first data object. Then, the existence of an associated data object of another SDM in said defined vicinity in particular may denote that there exists another SDM which, when overlaying over the first SDM, has a data object that is essentially (i.e., at least a defined share of said other object, e.g., said share being preferably at least 50% and most preferably at least 80%) included, and most preferably fully included inside said $\varepsilon$-environment. In other words, a given data object is in a defined vicinity of said first data object if all data points of said given data object have an orthogonal distance $d$ to the first data object that is smaller than the defined distance parameter, i.e., $d < \varepsilon$. In case of vectorized data objects with clearly defined end points and/or corner points, this amounts to said corner and/or end points each having a distance of $d < \varepsilon$ to the first data object.

In particular, a data object of another SDM essentially (i.e., at least by 50%, preferably at least by 80%) or fully included in said $\varepsilon$-environment of the first data object of the first SDM, may then be considered an associated data object. Preferably, for different object types (e.g. <u>w</u>all, <u>p</u>ole, parking <u>s</u>lot), different distance parameters $\varepsilon$-w # $\varepsilon$-p # $\varepsilon$-s may be defined.

The determination whether an associated data object exists in a defined vicinity of said first data object in any other SDM out of said plurality may also comprise a grid-based determination, i.e., the plurality of SDMs may be converted into corresponding grid maps each comprising a multiplicity of regular grid cells, such that the vicinity of said first data object may be defined cell-wise by the occupation of grid cells by said first data object and by data objects of said other SDMs, in particular when overlaying them with the first SDM.

Preferably, for the data object of said other SDM being an associated data object to the first data object of said first SDM, also the object type (e.g., a pole or a wall) may be compared, so that the associated data object must match the object type of the first data object.

By means of determining the existence of associated data objects of other SDMs in a defined vicinity of the first data object, a number of associated data objects of the first data object (either overall on the SDM level, or cell-wise on a grid cell level). From this number of associated data objects, an existence model is derived which provides a probability (the existence probability), and in particular, a likelihood function, for whether there exists a first fixed object at the location in the bordered traffic area which corresponds to the first data object. In other words, the first data object and the number of associated data objects are treated as observations of a possible fixed data object in the bordered traffic area for the existence model, i.e., for providing the existence probability for the existence of the fixed data object (wherein these observations are preferably raising the existence probability with increasing number). Preferably, also the number of SDMs which cover the region of the bordered traffic area corresponding to the first data object of the first SDM which do not comprise any associated data object, is taken into account for providing said existence probability (wherein an increasing number of SDMs without an associated data object preferably is lowering the existence probability).

Preferably, the existence probability is determined from an underlying likelihood function provided by the existence model, e.g., by means of an expectation value.

Based on said existence probability, a first master data object is registered into the fused map, wherein the first master data object represents the existence of a fixed object at the corresponding location in the bordered traffic area. In particular, this means that if the existence model determines that the existence of said fixed object in the bordered traffic area is assured with sufficient confidence, then a first master data object, being preferably given by or derived from the first data object, is registered into the fused map.

The proposed method allows for a fusion of SDMs even in case of noisy data, i.e., differing information on the dimensions and shape or even the existence of the data objects. A further advantage of the presented method for fusing a plurality of SDMs is that the method does not require any information on absolute positions of the fixed objects represented in the SDMs, but achieves a fused map contaning master data objects exclusively based on the individual proba-bilistic existence models for each fixed object, derived from the existence of associated data objects contained in the SDMs (and representing said fixed objects of the underlying bordered traffic area).

In an embodiment, each data object in a single drive map out of said plurality contains an information about an object type of the corresponding fixed object of the bordered traffic area, said object type being taken out of a set that comprises the object types wall, pole, parking slot, wherein the existence of an associated data object of the first data object is also based on the object type of the first data object. In particular, this may comprise that if the first data object corresponds to a wall (i.e., a fixed object of the object type "wall"), any data object of another SDM shall also be of the object type "wall" in order to be recognized an associated data object. This may be particularly useful for not mixing up different data objects corresponding to different walls and poles of the bordered traffic area.

In an advantageous embodiment, the first master data object is registered into said fused map on the basis of an expectation value of a likelihood function for the existence probability exceeding a first threshold, said likelihood function being provided by said existence model. This means in particular that the existence model, on the basis of the number of associated data objects to the first data object (and preferably, on the basis of the SDMs without such an associated data object), provides a likelihood function for the existence of the fixed data object at the given location in the bordered traffic area. Then, if the expectation value of said likelihood function exceeds a given first threshold (e.g., 75% or 80% or 90%), this may be taken as a necessary or as a sufficient condition for registering the first master data object, which corresponds to the first data object in the first SDM, into the fused map.

In yet another advantageous embodiment, the first master data object is registered into said fused map on the basis of a standard deviation of said likelihood function for the existence probability not exceeding a second threshold, said likelihood function being provided by said existence model. This means in particular that for likelihood function which is provided by the existence model, the standard deviation is determined. If this standard deviation does not exceed a given second threshold (e.g., 20% or 10%), this may indicate that a statement about the existence of the fixed data object may be made with sufficiently high confidence, which in turn may be taken as a necessary or as a sufficient condition for registering the first master data object into the fused map.

In particular, the described criteria both for the expectation value and for the standard deviation of said likelihood function are applied, wherein fulfilling both criteria may be taken a sufficient for registering the first master data object into the fused map (i.e., the expectation value is above the first threshold and the standard deviation is below the second threshold). There may also be an interdependence between the first and the second threshold in the sense that a for higher mean, a slightly higher standard deviation may be tolerated. Said interdependence may be tabulated.

Preferably, said existence model is providing said existence probability for the existence of said first fixed object by means of a Beta distribution and/or a binomial distribution as the likelihood function for the existence probability. In this respect, both the first data object from the first SDM and its associated data objects from other SDMs are taken as a "success" in a random variable with binary-valued outcome. The mentioned distributions are the typical corresponding mathematical models for such processes. Then, according to whether the first data object is treated "as a whole" (and an associated data object is to be found in an $\varepsilon$-environment of the first data object; first case) or cell-wise in a grid (and the presence of an associated data object is checked for each cell; second case), preferably, there is an individual existence model (and thus, another likelihood function) for each different data object to be registered into the fused map (first case) or for at least each grid cell of each data object of the first SDM (second case). In an alternative, another distribution than the above-mentioned ones may be chosen as said likelihood function, depending on a model for uncertainty in the detection of data objects on the SDM level and/or for detector noise.

The Beta distribution of a probability p is defined as

$$f_{Beta}(p, \alpha, \beta) := \frac{1}{B(\alpha, \beta)}\, p^{\alpha-1} \cdot (1-p)^{\beta-1}$$

(i)

with the so-called hyperparameters $\alpha$, $\beta$ describing the statistical evidence on the system, and the normalization constant given by the Beta function $B(\alpha, \beta)$.

In particular, the hyperparameters $\alpha$, $\beta$ of said Beta distribution $f_{Beta}(p, \alpha, \beta)$ as given in equation (i) are determined on the basis of the number of associated data objects to the first data object (and the first data object itself) as positive observations and on the number of SDM in said plurality without associated data objects to the first data object as negative observations. In particular, if for the first data object, the number of positive observations (i.e., the number of existing associated data objects and first data object itself) is k, and the number of negative observations (i.e., the number of SDMs which do not show an associated data object in the vicinity of the first data object) is n, then the likelihood function for the existence probability p of a fixed data object in the bordered traffic area corresponding to the first data object, given the positive observations k and the negative observations n may be given by $f_{Beta}(p, k + 1, n + 1)$ with the likelihood function $f_{Beta}(\cdot)$ being the Beta distribution as defined in equation (i). New observations (positive or negative) may then simply be updated into a change of the hyperparameters $\alpha = k+1$, $\beta = n+1$.

The Beta distribution represents a "belief" about an a priori unknown probability distribution of a random variable. It is thus also referred to as some sort of a "probability distribution of a probability", i.e., the "probability" (actually, the likelihood) for an unknown probability of a random variable having a certain value, given the positive and negative observations k, n, and is thus the "inverse" distribution to the binomial distribution, which gives the probability for a certain outcome of positive and negative observations k, n, given a probability p for the random variable. As the posterior binomial distribution is of the same mathematical form as the "prior" Beta distribution, the latter is called the "conjugate prior" fo the binomial distribution.

In an embodiment, said first data object is given as a vectorized object, and the determination of the existence of an associated data object in said defined vicinity of said first data object in another SDM comprises determining the existence of another data object given as a vectorized object in said other SDM not exceeding a given maximal distance to said first data object. The notion of a vectorized object shall in particular comprise that the object is defined by a set of vectors (e.g., vectors of important points of the data object such as corners or ends or edges, possibly defined with respect to a reference point or with respect to each other), and preferably the by lines connecting the points described by said vectors and/or the area enclosed by these, rather than as a cluster of discrete points such as a point cloud. In particular, this means that while the condition for an entire data object not exceeding the maximal distance to the first data object may be checked point-wise (or via the above-mentioned "important points" of the data objects, according to convenience), the existence model may take the associated data object as a whole.

In another and preferably alternative embodiment, at least a first SDM is given as or converted into a corresponding grid map comprising a multiplicity of regular grid cells, wherein said first data object defines a presence of said first data object in a number of grid cells, wherein the determination of the existence of an associated data object in said defined vicinity of said first data object in another SDM comprises determining the presence of another data object in said number of grid cells, and wherein said existence model is defined independently in each of said number of grid cells. In particular, this comprises the above-mentioned case that each of said number of grid cells has its individual likelihood function for the existence of the fixed object. In other words, in the grid of the first SDM, the grid cells which are covered or "touched" by the first data object, are identified. Then, for each of these grid cells, it is checked whether they are also covered or touched by other data objects from any other SDM for determining, cell by cell, the existence of the associate data objects.

Preferably, in this case, a number of grid cells is registered into said fused map as occupied by said first data object, and said first master data object is derived in said fused map on the basis of said number of grid cells occupied by the first data object. This comprises in particular that the grid cells for which, according to their respective existence models and likelihood functions, the existence of a fixed object at the corresponding location is confirmed, are registered into the fused map, and the final master data object is then derived in the fused map from these registered cells therein (e.g., by interpolation or by other object identification techniques).

In an alternative embodiment, the first data object is registered into said fused map as the first master data object based on said existence probability. In particular, this comprises that if the existence probability gives sufficient reason for registering a data object (which shall then be the first master data object) into the fused map, then, the first data object from the first SDM is taken as such data object, and is registered into the fused map as the first master data object. Preferably, all data objects registered into the fused map are defined and/or denominated as master data objects.

In a further embodiment, at least one SDM out of said plurality is truncated to represent a partial region within said bordered traffic area which has been visited by the corresponding vehicle during data collection when driving through said bordered traffic area, such that said SDM is only taken into account for said existence model for data objects corresponding to said partial region within said bordered traffic area. In particular, this comprises that preferably all SDMs are truncated to represent the partial region where they have actually been driving through, so that no major "blank spaces" of the bordered traffic area are present in the SDM. This helps to ensure that for a given SDM, the absence of an associated data object in the vicinity of the first data object does indeed mean that said given SDM does not show an associated data object in the vicinity of the first data object, and can therefore be treated as a negative observation for the existence model of the fixed object, as it cannot simply stem from lacking data of an unvisited part.

It is of further advantage if said plurality of SDMs, prior to fusing, is aligned with respect to a reference SDM chosen out of said plurality, said alignment being performed by means of respective rigid transforms for mapping each a respective SDM out of said plurality. In particular, in the case of the SDMs being generated on the basis of a data collection without associated GPS data (or other location data), and merely on odometry as a relevant positioning tool for the vehicle performing the data collection, the SDMs may have very different orientations (and positions) with respect to said reference frame (and thus, to each other). The pre-alignment prior to the fusing process ensures that positive observations in various SDMs do indeed correspond to each other, and that a negative observation doe indeed mean that an SDM does not have any data object at that location, rather than a negative observation being possibly caused due to a lateral displacement and/or a rotation of an SDM relative to another.

Preferably, said rigid transforms are determined on the basis of an image analysis of said fixed objects represented in the respective SDMs, said image analysis employing a determination of key points and corresponding feature descriptors for matching corresponding points in the respective SDMs, and/or an iterative method for transforming point clouds generated from said SDMs. Said key points are preferably determined on the basis of a set of kernels applying different (preferably Gaussian) filters to each SDM and then identify points of high image gradient in these filtered editions of an SDM. The key points of two SDMs may then be matched by means of the feature descriptors at each key point, wherein the feature descriptors contain information on the surroundings of a point possibly assessed with help of another set of kernels. The iterative transformation of a point-cloud SDM may be performed after or instead of an alignment based on the above-mentioned image analysis.

In an embodiment, a parking lot, and in particular an indoor parking lot, is taken as said bordered traffic area. While the proposed method generally has advantages for any type of bordered traffic area where absolute positioning data might be distorted, might fail or not be available, this can in particular be the case for parking lots, e.g. between buildings where the resolution of the positioning of a motor vehicle might be slightly distorted (leading to slightly distorted and thus more difficult-to-align SDMs) and specifically indoor parking lots, where a GPS signal is normally not even available.

The invention furthermore proposes a system configured to pairwise align a plurality of SMDs, said system containing means for retrieving at least a pair of SDMs, and computational means configured to align at least a first SDM with a second SDM by performing the method described above. The system according to the invention shares the advantages of the method according to the invention. The advantages stated for the method and for its further developments can be transferred analogously to the system. The system may in particular be given by or implemented in a central computation facility of a manufacturer of the two motorized vehicles, such that the system retrieves the respective SDMs that are generated by all of the manufacturer's cars that are in use, via suitable communication means, and processes them by means of corresponding CPU, RAM and further computational hardware provided by the central computation facility.

In the following, an embodiment of the invention is explained in more detail with the aid of drawings. The drawings show schematically in each case:

Fig. 1 a top view of two motorized vehicles acquiring respective SDMs of an indoor parking lot,

Fig. 2 a flow chart of a method for fusing a plurality of SDMs acquired by the motorized vehicles of Fig. 1, and

Fig. 3 diagrams of likelihood functions in the method of Fig. 2 for different numbers of observations.

Corresponding parts and sizes are each provided with the same reference signs in all figures.

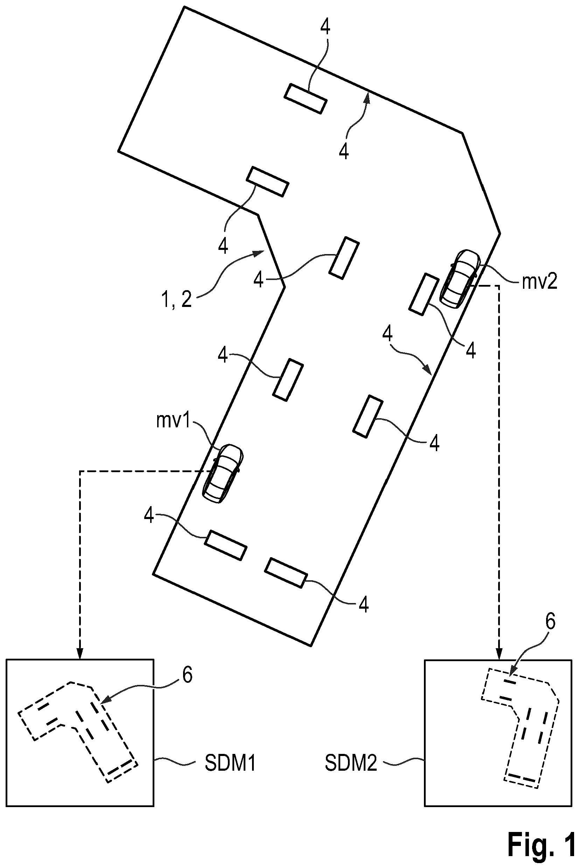

In Figure 1, a schematical top view of a bordered traffic area 1 is shown. In the present case, said bordered traffic area 1 is given by an indoor parking lot 2. The indoor parking lot 2 contains certain fixed objects 4, such as poles, walls, but also parking slots as defined by their delimitations.

A first and a second motorized vehicle mv1, mv2 are both driving through the indoor parking lot 2, possibly at different times. While driving through the indoor parking lot, the first motorized vehicle mv1, by means of its radar sensors (and possibly, its Lidar sensors), is performing a data collection on the fixed objects 4, such that the radar sensors of the first motorized vehicle mv1 (which may be a part of a DAS) generate radar data on the positions of the fixed objects 4. The data on the fixed objects 4 may be evaluated in order to identify the fixed objects 4 in the data. As these are located in the indoor parking lot 2, there is no GPS or similar absolute position data available to link a fixed objects 4 to a specific location. Thus, only odometry data might be available to allow for relative positioning information of the collected radar data.

From said radar data on the spatial distribution of delimitations of the indoor parking lot 2 (in particular, its enclosing walls) and of its (other) fixed objects 4 collected by the two motorized vehicles mv1, mv2, a first SDM (SDM1) and a second SDM (SMD2) are derived, respectively. This can be done by a processing of the collected radar data in the respective motorized vehicle mv1, mv2, generating the corresponding first /second SDM locally, i.e., by means of the onboard data processing hardware of the respective motorized vehicle mv1, mv2.

The first SDM (SDM1) may contain a map of "raw observations" (e.g., radar points etc.) of the indoor parking lot 2 that the first motorized vehicle mv1 has been driving through, or may be pre-processed in a sense that a recognition of data objects 6 corresponding to the fixed objects 4 of the indoor parking lot 2 may have been performed. The data objects 6 may thus be given by an agglomeration of data points, or may be vectorized data, both of which containing information on the presence of a data object 6 at a specific location of the SDM (corresponding to information of the presence of a fixed object 4 at a specific location the indoor parking lot 2). Please note that the data objects 6 of the first SDM (SDM1) do not necessarily cover all fixed objects 4 of the indoor parking lot 2 (as the first motorized vehicle mv1 possibly did not drive through the entire indoor parking lot 2), and might not correspond exactly to the data objects 6 of the second SDM (SDM2) due to detection noise etc.

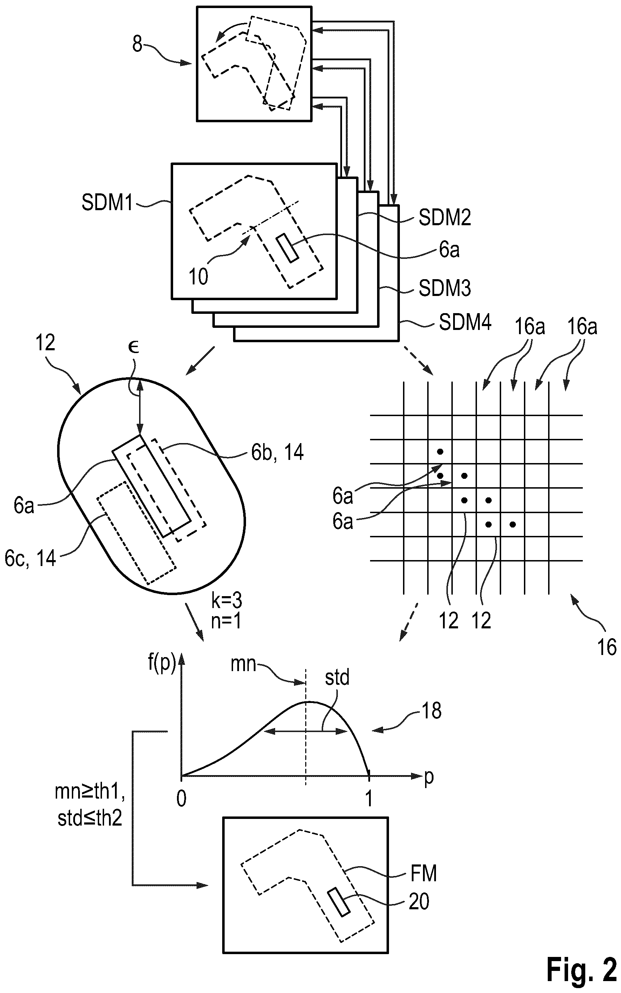

Figure 2 shows flowchart representing different steps of a method for fusing several different SDMs of the bordered traffic area 1 of Figure 1, and in particular, for fusing the first and second SDM of Figure 1 (SDM1 and SDM2) and third and fourth SDM (SDM3, SDM4).

In a step prior to the actual fusing, the four SDMs (SDM1- SDM4) are subject to an alignment process 8. In this alignment process 8, the second, third and fourth SDM (SDM2, SDM3, SDM4) are aligned pairwise to the first SDM (SDM1), by means of an image analysis which identifies key points in each SDM and assigns to each key point a feature descriptor (a unique identifier of the surroundings of the respective key point) such that key points of two different SDMs may be pairwise matched to each other via their respective feature descriptors. From said key points, an optimal rigid transform (rotation and/or translation) may be derived that maps the maximum number of key points of two different SDMs onto each other. Then, after this first alignment step, an iterative process may be performed that treats each SDM as a point cloud, wherein closest points of two SDMs are derived in order to find another optimal rigid transform for further minimizing mismatch between the different SDMs.

The SMDs afterwards are truncated to a partial region 10 (shown here only for the first SDM) which shall represent the region of the indoor parking lot 2 of Figure 1 that the corresponding motorized vehicle mv1, mv2 has actually visited (and thus, has collected data about), in order to avoid SDMs with large spaces without any useful data.

Now, a first data object 6a of the first SDM (SDM1) of the object type "wall" is compared to possible counterparts in the other three SDMs (SDM2-SDM4). This may be done by checking (solid arrow) whether in a vicinity 12 of the first data object 6a of the first SDM (SDM1), there are any other data objects from other SDMs when overlaying them over the first SDM (SDM1). The vicinity 12 of the first data object 6a here defines the environment of a given maximal (orthogonal) distance $\varepsilon$ to the first data object 6a. In the present case, the first data object 6a (solid line) has another two data objects 6b, 6c (dashed and dotted lines) of the matching object type "wall" in its vicinity 12, where it may be assumed without loss of generality that the data object 6b stems from the second SDM (SDM2) and the data object 6c stems from the third SDM (SDM3) when overlaying these with the first SDM (SDM1). The fourth SDM (SDM4) does not shown any data object in the vicinity 12 of the first data object 6a.

As the data objects 6b, 6c lie in the vicinity 12 of the first data object 6a, and as their object type matches ("wall"), they are considered associated data objects 14 to the first data object 6a.

Another possibility (dashed arrow) to check for the existence of said associated data objects 14 for the first data object 6a is to convert at least the first SDM1 into a grid map 16 of regular grid cells 16a (and overlay the grid with all other SDMs). Then, the presence of an associated data object 14 in the vicinity 12 of the first data object 6a can be checked in the way that the first data object 6a covers or occupies certain grid cells 16a (see dots), which are then defining the vicinity 12. Then, a data object of the object type "wall" that falls into one of these grid cells 16a that are occupied by the first data object 6a, lies in its vicinity 12, so that the associated data object 14 exists in this case.

From the first data object 6a and these associated data objects 14, i.e., from their existence in the vicinity 12, an existence model 18 is derived, said existence model 18 providing an existence probability p for the existence of a fixed object 4 in the indoor parking lot 2 at the location corresponding to the first data object 6a.

The existence model 18 provides a likelihood function f(p) for the existence probability p, which is given by the Beta distribution according to equation (i) with three positive observations k= 3 (the first data object 6a itself and the other data objects 6b, 6c in its vicinity 12), and one negative observation n = 1 (the fourth SDM not showing any data object in the vicinity 12 of the first data object 6a). With these observations k, n, the likelihood function f(p) is given by the Beta distribution $f_{Beta}$ $(p, k + 1, n + 1)$.

Then, in order to decide whether in the indoor parking lot 2 there exists said fixed object 4 corresponding to the first data object 6a, it is checked whether the expectation value mn of the likelihood function f(p) is compared to a first threshold th1, i.e., whether mn $\geq$ th1 (in order to ensure that the probability for the existence of the fixed object 4 is sufficiently high), and the standard deviation std of the likelihood function f(p) is compared to a second threshold th2, i.e., whether std $\leq$ th2 (in

order to ensure that the confidence for the existence of the fixed object 4 is sufficiently high, or the uncertainty is sufficiently low).

If this is the case, i.e., if mn ≥ th1 and std ≤ th2, then the first data object 6a is registered into a fused map FM as a first master data object 20. Said first master data object 20 in the fused map FM shall denote that the method has determined with sufficiently high confidence and likelihood that there exists a fixed object 4 at location in the indoor parking lot 2 corresponding to the first master data object 20 in the fused map 20.

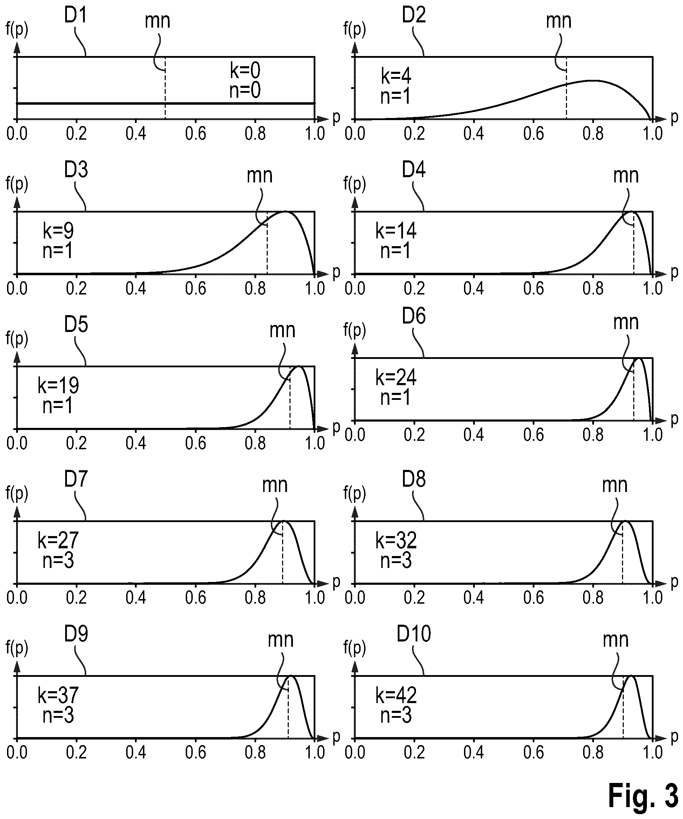

Figure 3 shows different diagrams D1 to D10 of the likelihood function f(p) for the existence probability p. The likelihood function f(p) is given by the Beta distribution $f_{Beta}(p, k + 1, n + 1)$ as defined in equation (i), with varying numbers of k positive observations and n negative observations. The specific numbers k and n (positive and negative observations) that lead to a given likelihood function f(p) are indicated for each diagram D1 to D10, as well as its respective expectation value mn. As it can be seen from the decreasing width of the likelihood function f(p) with increasing number of observations k and n, the standard deviation (not explicitly depicted in the diagrams D1 to D10) decreases, leading thus to a higher confidence for a statement to be made based on the respective expectation value mn. Note the slight variations of the expectation value mn when adding few a negative observations n (from diagram D6 to D7) or when adding a few positive observations k (e.g., from D7 to D10). As the likelihood function f(p) is not symmetrical, but has a "tail" towards its low end (i.e., towards p=0), the expectation value mn for f(p) does not necessarily coincide exactly with its maximum value.

Although the invention has been illustrated and described in more detail by the preferred embodiment example, the invention is not limited by the disclosed examples and other variations may be derived by the skilled person without departing from the scope of protection of the invention.

Reference Numeral

| 1 | bordered traffic area |
| 2 | indoor parking lot |
| 4 | fixed objects |
| 6, 6b. 6c | data objects |
| 6a | first data object |
| 8 | alignment process |
| 10 | partial region |
| 12 | vicinity (of the first data object) |
| 14 | associated data object |
| 16 | grid map |
| 16a | grid cells |
| 18 | existence model |
| 20 | first master data object |
| D1-10 | diagram |
| FM | fused map |
| f(p) | likelihood function |
| k | positive observation |
| mn | expectation value (of likelihood function) |
| mv1/2 | first/second motorized vehicle |
| n | negative observation |
| p | existence probability |
| SDM1-4 | first to fourth single drive map |
| std | standard deviation (of likelihood function) |
| th1/2 | first/second threshold |
| ε | distance |

**Claims**

1. Method for fusing a plurality of single drive maps (SDM1-SDM4),

   each single drive map (SDM1-SDM4) containing a plurality of data objects (6, 6a-c) associated with corresponding fixed objects (4) of a bordered traffic area (1), said data objects (6, 6a-c) being based on a data collection by a respective vehicle (mv1, mv2) when driving through said bordered traffic area (1),
   wherein for a first data object (6a) of a first single drive map (SDM1), it is determined whether an associated data object (14) exists in a defined vicinity 812) of said first data object (6a) in any other single drive map (SDM2-SDM4) out of said plurality, acquiring thereby a number of associated data objects (14) of the first data object (6a), wherein, based on the number of said associated data objects (14), an existence model (18) for the existence of a first fixed object (4) at the location in the bordered traffic area (1) corresponding to said first data object (6a) is derived, said existence model (18) providing an existence probability (p) for the existence of said first fixed object (4), and wherein a first master data object (20) is registered into a fused map (FM), said fused map (FM) being the fusion of said plurality of single drive maps (SDM1-SDM4), based on said existence probability (p).

2. The method according to claim 1,

   wherein each data object (6, 6a-c) in a single drive map (SDM1-SDM4) out of said plurality contains an information about an object type of the corresponding fixed object (4) of the bordered traffic area (1), said object type being taken out of a set that comprises the object types wall, pole, parking slot, and
   wherein the existence of an associated data object (14) of the first data object (6a) is also based on the object type of the first data object (6a).

3. The method according to claim 1 or claim 2,
   wherein the first master data object (20) is registered into said fused map (FM) on the basis of an expectation value (mn) of a likelihood function (f(p)) for the existence probability (p) exceeding a first threshold (th1), said likelihood function (f(p)) being provided by said existence model (18).

4. The method according to any of the preceding claims,
   wherein the first master data object (20) is registered into said fused map (FM) on the basis of a standard deviation (std) of said likelihood function (f(p)) for the existence probability (p) not exceeding a second threshold (th2).

5. The method according to any of the preceding claims,
   wherein said existence model (18) is providing said existence probability (p) for the existence of said first fixed object (4) by means of a Beta distribution and/or a Bernoulli distribution as the likelihood function (f(p)) for the existence probability (p).

6. The method according to claim 5,
   wherein the hyperparameters of said Beta distribution are determined on the basis of the number of associated data objects (14) to the first data object (6a) as positive observations (k) and on the number of single drive maps (SDM4) in said plurality without associated data objects (14) to the first data object (6a) as negative observations (n).

7. The method according to any of the preceding claims,
   wherein said first data object (6a) is given as a vectorized object, and the determination of the existence of an associated data object (14) in said defined vicinity (12) of said first data object (6a) in another single drive map (SDM2-SDM4) comprises determining the existence of another data object (6b, 6c) given as a vectorized object in said other single drive map (SDM2-SDM4) not exceeding a given maximal distance ($\varepsilon$) to said first data object (6a).

8. The method according to any of the preceding claims,

   wherein at least a first single drive map (SDM1) is given as or converted into a grid map (16) comprising a multiplicity of regular grid cells (16a),
   wherein said first data object (6a) defines a presence of said first data object (6a) in a number of grid cells (16a),
   wherein the determination of the existence of an associated data object (14) in said defined vicinity (12) of said first data object (6a) in another single drive map (SDM2-SDM4) comprises determining the presence of another data object (6b, 6c) in said number of grid cells (16a), and
   wherein said existence model (18) is defined independently in each of said number of grid cells (16a).

9. The method according to claim 8,

   wherein a number of grid cells (16a) is registered into said fused map (FM) as occupied by said first data object (6a), and
   wherein said first master data (20) object is derived in said fused map (FM) on the basis of said number of grid cells (16a) occupied by the first data object (6a).

10. The method according to any of claims 1 to 8,
wherein the first data object (6a) is registered into said fused map (FM) as the first master data (20) object based on said existence probability (p).

11. The method according to any of the preceding claims,
wherein at least one single drive map (SDM1-SDM4) out of said plurality is truncated to represent a partial region (10) within said bordered traffic area (1) which has been visited by the corresponding vehicle (mv1, mv2) during data collection when driving through said bordered traffic area (1), such that said single drive map (SDM1-SDM4) is only taken into account for said existence model (18) for data objects (6, 6a-c) corresponding to said partial region (10).

12. The method according to any of the preceding claims,
wherein said plurality of single drive maps (SDM1-SDM4), prior to fusing, is aligned with respect to a reference single drive map (SDM1) chosen out of said plurality by means of respective rigid transforms for mapping each a respective single drive map (SDM2-SDM4) out of said plurality.

13. The method according to claim 12,
wherein said rigid transforms are determined on the basis of

- an image analysis of said fixed objects (4) represented in the respective single drive maps (SDM1-SDM4), said image analysis employing a determination of key points (8a) and corresponding feature descriptors (8b) for matching corresponding points in the respective single drive maps (SDM1-SDM4), and/or
- an iterative method for transforming point clouds generated from said single drive maps (SDM1-SDM4).

14. The method according to one of the preceding claims,
a parking lot is taken (2) as said bordered traffic area (1).

15. A system configured for a fusing of a plurality of single drive maps (SDM1-SDM4), said system containing means for retrieving plurality of single drive maps (SDM1-SDM4), and computational means configured to fuse said plurality of single drive maps (SDM1-SDM4) by performing the method according to any of the preceding claims.

4

4

4

1, 2

4

mv2

4

4

4

mv1

4

4

6

6

SDM1

SDM2

**Fig. 1**

**Fig. 2**

Fig. 3

| | Europäisches Patentamt European Patent Office Office européen des brevets | **EUROPEAN SEARCH REPORT** | Application Number EP 24 21 7384 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/366698 A1 (NISTER DAVID [US] ET AL) 16 November 2023 (2023-11-16) | 1,3,4, 10,12, 13,15 | INV. G01C21/00 |
| Y | * paragraphs [0009], [0077], [0084], [0097] - [0112], [0125], [0134]; figures 3,5A,7 * ----- | 2,5-9, 11,14 | |
| Y | US 2019/271550 A1 (BREED DAVID S [US] ET AL) 5 September 2019 (2019-09-05) * paragraph [0072] * ----- | 2,14 | |
| Y | WO 2018/009263 A1 (QUALCOMM INC [US]) 11 January 2018 (2018-01-11) * paragraphs [0050] - [0057] * ----- | 5,6,8,9 | |
| Y | US 2010/021012 A1 (SEEGERS PETER A [US] ET AL) 28 January 2010 (2010-01-28) * paragraph [0061] * ----- | 7 | |
| Y | WO 2019/018315 A1 (KAARTA INC [US]) 24 January 2019 (2019-01-24) * paragraph [0112] * ----- | 11 | TECHNICAL FIELDS SEARCHED (IPC) G01C G06N B60N F21S G08G G09B G01S |

The present search report has been drawn up for all claims

| Place of search | Date of completion of the search | Examiner |
|---|---|---|
| The Hague | 28 March 2025 | de la Rosa Rivera, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7384

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2025

| Patent document cited in search report | Publication date | Patent family member(s) | Publication date |
|---|---|---|---|
| US 2023366698 A1 | 16-11-2023 | CN 114667437 A | 24-06-2022 |
| | | DE 112020004139 T5 | 12-05-2022 |
| | | JP 7644094 B2 | 11-03-2025 |
| | | JP 2022546397 A | 04-11-2022 |
| | | US 2021063198 A1 | 04-03-2021 |
| | | US 2021063199 A1 | 04-03-2021 |
| | | US 2021063200 A1 | 04-03-2021 |
| | | US 2023204383 A1 | 29-06-2023 |
| | | US 2023357076 A1 | 09-11-2023 |
| | | US 2023366698 A1 | 16-11-2023 |
| | | WO 2021042051 A1 | 04-03-2021 |
| US 2019271550 A1 | 05-09-2019 | CN 109641538 A | 16-04-2019 |
| | | US 2019271550 A1 | 05-09-2019 |
| | | WO 2018017793 A1 | 25-01-2018 |
| WO 2018009263 A1 | 11-01-2018 | CN 109313810 A | 05-02-2019 |
| | | US 2018012370 A1 | 11-01-2018 |
| | | WO 2018009263 A1 | 11-01-2018 |
| US 2010021012 A1 | 28-01-2010 | EP 2148168 A2 | 27-01-2010 |
| | | JP 5702527 B2 | 15-04-2015 |
| | | JP 2010049251 A | 04-03-2010 |
| | | US 2010021012 A1 | 28-01-2010 |
| | | US 2012281017 A1 | 08-11-2012 |
| WO 2019018315 A1 | 24-01-2019 | EP 3656138 A1 | 27-05-2020 |
| | | WO 2019018315 A1 | 24-01-2019 |

EPO FORM P0459

For more details about this annex : see Official Journal of the European Patent Office, No. 12/82